(19) Europäisches Patentamt
European Patent Office
Office européen des brevets

(11) Veröffentlichungsnummer: **0 416 388 A2**

(12) **EUROPÄISCHE PATENTANMELDUNG**

(21) Anmeldenummer: **90116217.2**

(51) Int. Cl.5: **G11B 5/702**

(22) Anmeldetag: **24.08.90**

(30) Priorität: **02.09.89 DE 3929167**

(43) Veröffentlichungstag der Anmeldung: **13.03.91 Patentblatt 91/11**

(84) Benannte Vertragsstaaten: **DE FR GB NL**

(71) Anmelder: **BASF Aktiengesellschaft**
**Carl-Bosch-Strasse 38**
**W-6700 Ludwigshafen(DE)**

(72) Erfinder: **Bobrich, Michael, Dr.**
**In den Muehlgaerten 3**
**W-6737 Boehl-Iggelheim(DE)**
Erfinder: **Lehner, August**
**Wachenheimer Strasse 4**
**W-6701 Roedersheim-Gronau(DE)**
Erfinder: **Kohl, Albert**
**Schlossstrasse 26**
**W-6711 Laumersheim(DE)**
Erfinder: **Suettinger, Rudolf, Dr.**
**Karl-Christ-Strasse 17**
**W-6900 Heidelberg(DE)**
Erfinder: **Keppeler, Uwe, Dr.**
**Ungsteiner Strasse 22**
**W-6700 Ludwigshafen(DE)**
Erfinder: **Lenz, Werner, Dr.**
**Heinrich-Baermann-Strasse 14**
**W-6702 Bad Duerkheim(DE)**
Erfinder: **Roller, Hermann**
**Schwedlerstrasse 118**
**W-6700 Ludwigshafen(DE)**
Erfinder: **Kopke, Helmut**
**Goethestrasse 11**
**W-6714 Weisenheim(DE)**
Erfinder: **Schulz, Günther, Dr.**
**Im Roehrich 45**
**W-6702 Bad Duerkheim(DE)**

# (54) Magnetische Aufzeichnungsträger.

(57) Die Erfindung betrifft magnetische Aufzeichnungsträger, bestehend aus einem nichtmagnetischen Trägermaterial und mindestens einer darauf haftfest aufgebrachten magnetisierbaren Schicht auf Basis eines Polyurethanbindemittels, wobei das Bindemittel zu mindestens 50 Gew.% aus einem hochmolekularen verzweigten Polyurethanelastomeren mit OH-gruppenhaltigen Harnstoffgruppen an den Kettenenden besteht und in dem durch Einbau von Perfluorgruppen die Gleiteigenschaften verbessert und die Reibung verringert wird.

EP 0 416 388 A2

# MAGNETISCHE AUFZEICHNUNGSTRÄGER

Die Erfindung betrifft magnetische Aufzeichnungsträger, bestehend aus einem nichtmagnetischen Trägermaterial und mindestens einer darauf haftfest aufgebrachten magnetisierbaren Schicht auf Basis eines Polyurethanbindemittels, wobei das Bindemittel zu mindestens 50 Gew.% aus einem hochmolekularen verzweigten Polyurethanelastomeren mit OH-gruppenhaltigen Harnstoffgruppen an den Kettenenden besteht und in dem durch Einbau von Perfluorverbindungen die Gleiteigenschaften verbessert und die Reibung verringert wird.

In modernen Audio- und Videoaufzeichnungs- und Wiedergabegeräten werden an magnetische Aufzeichnungsträger Anforderungen in vielfacher Hinsicht gestellt. Neben den hohen Ansprüchen an die Aufzeichnungs- und Wiedergabeeigenschaften bei Audiobändern, Videobändern und flexiblen Datenträgern, die stetig verbessert werden, wird vor allem hinsichtlich der mechanischen Eigenschaften der Aufzeichnungsträger eine ständige Verbesserung gefordert. Die Magnetschichten müssen sehr flexibel sein, eine hohe Elastizität und eine hohe Reißfestigkeit aufweisen. Daneben wird, zur Vermeidung von Pegeleinbrüchen, zunehmend eine Verrringerung der Reibungswerte, eine Erhöhung der Abrieb- und Verschleißfestigkeit, gefordert.

Eine Verbesserung der Aufzeichnungs- und Wiedergabeeigenschaften der magnetischen Aufzeichnungssysteme kann z.B. durch Erhöhung der Pigmentvolumenkonzentration bzw. durch Verwendung von feinteiligerem magnetischem Material erreicht werden. Durch derartige Maßnahmen wird jedoch die mechanische Stabilität der Magnetschicht nachhaltig beeinflußt.

In der Patentliteratur werden viele Polyurethane bzw. Polyurethanelastomere, welche für die Herstellung magnetischer Aufzeichnungsträger geeignet sind, so beispielsweise in DE-B 11 06 959, DE-B 25 00 921, 24 42 763 oder DE-B 27 53 694, beschrieben.

Bei der Verwendung dieser üblichen Bindemittelsysteme treten bei der Aufnahme und Wiedergabe von Signalen mittels magnetischer Aufzeichnungsträger, welche im Kontakt über den Magnetkopf geführt und zudem noch über Umlenkrollen, -bolzen oder anderen Führungselemente bewegt werden, je nach Ausbildung der Schicht sehr hohe Reibungskräfte und häufig auch der Stick-Slip-Effekt oder "squeal"-Erscheinungen auf. "Stick-Slip" bezeichnet einen unregelmäßigen Bandtransport, wobei das Band abwechselnd stillsteht und weiterverläuft. "Squeal" ist ein unregelmäßiger Bandtransport, wobei die Geschwindigkeit des Bandes zwar nicht konstant ist, aber auch kein Stillstand des Bandes auftritt. Der dadurch entstehende Abrieb beeinflußt sowohl die Lebensdauer als auch die Betriebssicherheit.

Die Dauerlaufeigenschaften magnetischer Aufzeichnungsträger werden also durch die Oberflächenreibung (Gleitreibung) der Magnetschicht stark beeinflußt. Daher wird eine möglichst kleine Oberflächenreibung angestrebt, ohne daß die Aufzeichnung und Wiedergabe von Signalen verschlechtert wird.

Es ist daher üblich, den Schichtzusammensetzungen von magnetischen Aufzeichnungsträgern Gleitmittel zuzusetzen. Als geeignete Gleitmittel sind für diesen Zweck bereits eine große Anzahl verschiedener Gleitmittel, wie Polydimethylsiloxane, Paraffinöle, Wachse, gesättigte und ungesättigte Fettsäuren, Fettsäureester, Fettsäureamide, Salze von Fettsäuren, ferner feste Schmierstoffe, wie Molybdänsulfid, Graphit, Polytetraethylenpulver und Polytrichlorfluorethylenpulver beschrieben. Auch wird angegeben, daß flüssige bzw. pastenförmige Gleitmittel gegenüber den festen Gleitmitteln den Vorteil besitzen, die zu schmierende Oberfläche mit einem homogen dünnen Oberflächenfilm zu bedecken, wobei die mengenmäßige Zugabe an Gleitmittel sehr gering gehalten werden muß, da sonst die Oberfläche leicht klebrig wird. Diese flüssigen Gleitmittel können jedoch häufig nicht als alleinige Gleitmittel verwendet werden und werden deshalb mit festen oder pastenförmigen Gleitmittel kombiniert. Bei ausschließlicher Verwendung von flüssigen Gleitmitteln lassen sich bei vielen Anwendungsgebieten, insbesondere bei längerer Benutzungsdauer und ungünstigen Klimabedingungen weder das Sticken noch das Blocken und Verkleben der Bänder dauerhaft vermeiden.

So führt die Verminderung der Oberflächenreibung durch Zusatz von Siliconöl, wie es bereits in der DE-B 877 213 beschrieben ist, speziell im Klimatest bei 40 °C und 80 % relativer Feuchte, zum Ausschwitzen des Gleitmittels und damit zum Verkleben bzw. Blocken einzelner Magnetschichten.

Beim Zusatz von Schmierstoffen in Form feinverteilter, unlöslicher hydrophober Feststoffe oder wachsartiger Stoffe ist die Schmierwirkung nicht einheitlich, sondern die Feststoffpartikel befinden sich schon kurz nach der Herstellung nur an begrenzten Stellen an der Oberfläche sowie im Inneren der Magnetschicht. Diese hydrophoben Gleitmittel ziehen schlecht oder nicht auf das meist hydrophile magnetische Material auf und schwitzen besonders bei ungünstigen Klimabedingungen, wie hoher Temperatur und hoher Luftfeuchtigkeit, leicht aus. Dadurch kommt es zu Ablagerungen an allen bandberührenden Teilen, besonders am Kopf, wodurch Pegeleinbrüche verursacht werden.

Unabhängig davon ergab es sich, daß die bekannten hochmolekularen Polyurethanelastomere als Bindemittel oder in Bindemittelkombination die steigenden Qualitätsanforderungen bezüglich der Schichthaftung dann nicht mehr erfüllen können, wenn sowohl Temperatur wie auch Luftfeuchtigkeit, z.B. auf 30 bis 60° C bei 80 bis 100 % rel. Luftfeuchtigkeit erhöht werden.

Es wurde daher bereits vielfach versucht, die Nachteile der hohen Oberflächenreibung, die bei allen Magnetbandbindemitteln vorhanden sind, durch Zusatz von niedermolekularen oder von oligomeren Perfluorverbindungen zu verringern.

Die Verbesserung der Oberflächenreibung durch Zusatz perfluorierter Verbindungen, wie u.a. in den JP-A 60-160 020, 57-092 428 und DE-A 34 07 721 beschrieben, bringt jedoch, speziell im Klimatest bei 40° C und 80 % relativer Feuchte, die Gefahr des Ausschwitzens der Gleitmittel und damit das Verkleben bzw. Blocken einzelner Magnetschichten mit sich. Das Aufbringen oligomerer perfluorierter Verbindungen, wie in NL-A 71 11 865, NL-A 8000 060, US-A 40 85 137, EP-A 136 102 und EP-A 151 877 beschrieben, zeitigt zwar ein befriedigendes Klimalaufverhalten, doch entsteht hier die Gefahr des "Aufsammels" der oligomeren Anteile durch den Lesekopf, mit allen für Lesekopfablagerungen typischen Problemen, wie vor allem die Verschlechterung der elektrischen Kenngrößen.

In der US-A 4 526 836 bzw. JP-A-58 169 261 ist die Herstellung und die Verwendung von fluorhaltigen Copolymeren beschrieben, doch werden bevorzugt 30 bis 90 Gew.% dieser Copolymeren in Kombination mit einem Härter eingesetzt. Daraus resultiert, daß die mechanischen Eigenschaften der mit diesem Bindemittelsystem hergestellten Magnetbänder sehr unzureichend ist, so daß einer breiten Verwendung bei den unterschiedlichen Datenträgern, wie z.B. HDC, Audio, Video oder Flexy Disks, Grenzen gesetzt sind. In der JP-A 58 141 438 wird ebenfalls ein fluoriertes Polyol, welches mit Polyisocyanaten gehärtet werden kann, als Bindemittel eingesetzt, doch weist die resultierende Magnetschicht nur unbefriedigende Laufeigenschaften auf.

Es war daher Aufgabe der Erfindung, magnetische Aufzeichnungsträger, bestehend aus einem nichtmagnetischen Trägermaterial und mindestens einer darauf haftfest aufgebrachten magnetisierbaren Schicht auf der Basis von in einem Polymerbindemittel und weiteren üblichen Zusatzstoffen fein verteilten magnetischen Material bereitzustellen, welche sowohl eine verbesserte Verschleißfestigkeit und verminderte Reibungswerte auch unter ungünstigen klimatischen Bedingungen aufweisen, und dennoch nicht das nachteilige Blockieren beim Betrieb der Aufzeichnungsträger und das Ausschwitzen von Gleitmittel zeigen.

Es wurde nun gefunden, daß bei einem magnetischen Aufzeichnungsträger, bestehend aus einem nichtmagnetischen Trägermaterial und mindestens einer haftfest darauf aufgebrachten Magnetschicht auf der Basis eines in einem mindestens zu 50 Gew.% aus einem thermoplastischen Polyurethan bestehenden Bindemittel feinverteilten magnetischen Materials sich die gestellte Aufgabe lösen läßt, wenn als thermoplastisches Polyurethan ein fluorgruppenhaltiges in Tetrahydrofuran lösliches, isocyanatgruppenfreies, verzweigtes Polyurethan mit OH-gruppenhaltigen Harnstoffgruppen an den Kettenenden und einem Molekulargewicht zwischen 25 000 und 150 000 eingesetzt wird, welches aus

A) 1 Mol eines Polyols mit einem Molekulargewicht zwischen 400 und 4000,

B) 0,3 bis 10 Mol eines Diols mit 2 bis 18 Kohlenstoffatomen,

C) 0,01 bis 1 Mol eines Triols mit 3 bis 18 Kohlenstoffatomen,

D) 0,001 bis 0,4 Mol einer Perfluorverbindung mit zwei gegenüber Isocyanaten reaktiven Endgruppen und einem Molgewicht zwischen 300 und 4000,

E) 1,25 bis 13 Mol eines Diisocyanats mit 6 bis 30 Kohlenstoffatomen, wobei das Verhältnis NCO:OH in der Summe der Komponenten A, B, C und D 0,95:1,0 bis 1,1:1,0 beträgt, und

F) 0,05 bis 2 Mol eines OH-gruppenhaltigen, gegenüber Isocyanaten reaktiven Amins hergestellt wird.

In einer weiteren vorteilhaften Ausgestaltung des erfindungsgemäßen Gegenstands besteht die Komponente D aus einem Umsetzungsprodukt aus perfluorierten Monoalkoholen, Monoaminen oder Monocarbonsäuren mit 4 bis 20 Kohlenstoffatomen mit einem Triol, wobei die gegenüber Isocyanaten reaktive Wasserstoffatome tragenden Gruppen der perfluorierten Verbindung über ein Diisocyanat mit 6 bis 30 Kohlenstoffatomen an einer OH-Gruppe des Triols gebunden sind. Diese Umsetzung läßt sich auch in situ erreichen, wobei die Monofluorverbindung als Gemisch mit den Diolen und Triolen im Reaktor, in dem das Polymer hergestellt wird, eingesetzt wird. Bevorzugt sind bei den perfluorierten Monoalkoholen, Monoaminen oder Monocarbonsäuren solche mit einer linearen Kette. Die die Gleitreibung begünstigenden $CF_2$-Gruppen sind somit entlang der Polymerkette oder in einer kurzen Seitenkette eingebaut.

Zur Erzielung spezieller Eigenschaften ist es von Vorteil, wenn das Polymer eine OH-Zahl zwischen 5 und 30, vorzugsweise 10 bis 25 aufweist. Das Molekulargewicht (Mw) liegt zwischen 25 000 und 150 000, entsprechend einem K-Wert (1%ig in DMF) zwischen 35 und 75. Beim Aufbau dieser Polymeren hat es sich als zweckmäßig erwiesen, daß die OH-Endgruppen zum Teil, vorzugsweise über 80 % und insbesondere zu mehr als 90 % aus einem der folgenden Reste bestehen:

-NH-Co-NR′-R-OH oder

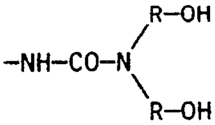

wobei R = $-(CH_2)_n-$
R′ = -H, $-CH_3$, $-(CH_2)_m-CH_3$ und
n = 2 bis 10
m = 1 bis 10
bedeuten.

In dieser Weise aufgebaute Polymere weisen gegenüber solchen ohne diese Endgruppen eine verbesserte Haftfestigkeit auf. Weiterhin besteht dadurch die Möglichkeit den Gehalt an OH-Endgruppen zu erhöhen, wodurch bei der Vernetzung mit Polyisocyanat der Vernetzungsgrad, entsprechend den Anforderungen an die Magnetschicht, in weiten Grenzen. variiert werden kann. Ebenfalls von Vorteil sind die Harnstoffgruppen, welche die Dispergierfähigkeit gegenüber den üblichen magnetischen Materialien erhöhen.

Hierbei war es überraschend, daß die Haftfestigkeit trotz der im Bindemittel eingebauten Perfluorgruppen verbessert war, obwohl der Randwinkel von Wasser gegenüber dem Bindemittelfilm größer 96° ist.

Die erfindungsgemäß als Bindemittel in den Magnetschichten verwandten Polyurethane haben im allgemeinen eine Härte nach DIN 53 157 von 20 bis 130 s. Sie weisen ferner einen E-Modul (Elastizitätsmodul gemäß DIN 53 457) im Bereich von 50 bis 2500 $Nmm^{-2}$, eine Reißdehnung größer 70 % (DIN 53 455) und eine Reißfestigkeit zwischen 25 und 70 $Nmm^{-2}$ (DIN 53 455) auf. Der Erweichungspunkt liegt zwischen 80 und 180° C. Besonders günstig ist eine Pendelhärte (DIN 53 157) von 25 bis 125 s, ein E-Modul von 55 bis 2000 $Nmm^{-2}$, eine Reißdehnung von 80 bis 500 % und eine Reißfestigkeit von 25 bis 50 $Nmm^{-2}$.

Die vorteilhaften Eigenschaften der erfindungsgemäß aufgebauten magnetischen Aufzeichnungsträger werden im Vergleich zu den unter Verwendung der üblichen thermoplastischen Polyurethanelastomeren erhaltenen auch deutlich, wenn vor dem Auftragen der Dispersion auf den Träger ein Polyisocyanat zugesetzt wird. Für die Vernetzung kann eine Vielzahl organischer Di-, Tri- oder Polyisocyanate oder Isocyanatprepolymerer bis zu einem Molekulargewicht von 10 000, vorzugsweise zwischen 500 und 3000, verwendet werden. Bevorzugt sind Polyisocyanate bzw. Isocyanatprepolymere, die mehr als 2 NCO-Gruppen als Molekül tragen. Als besonders geeignet haben sich Polyisocyanate auf Basis von Toluylendiisocyanat, Hexamethylendiisocyanat oder Isophorondiisocyanat, die durch Polyaddition an Di- oder Triole oder durch Biuret- und Isocyanuratbildung entstehen, erwiesen. Besondes günstig ist ein Additionsprodukt von Toluylendiisocyanat an Trimethylolpropan und Diethylenglykol.

Zur Herstellung der Polyurethane wird als Komponente A ein Polydiol mit einem Molekulargewicht von 400 bis 4000, bevorzugt von 700 bis 2500, eingesetzt. Hierzu eignen sich die bekannten Polyesterole, Polyetherole, Polycarbonatdiole und Polycaprolactondiole.

Die Polyesterole sind zweckmäßigerweise überwiegend lineare Polymere mit endständigen OH-Gruppen, bevorzugt solche mit 2 OH-Endgruppen. Die Säurezahl der Polyesterole ist kleiner als 10 und vorzugsweise kleiner als 3. Die Polyesterole lassen sich in einfacher Weise durch Veresterung von aliphatischen, aromatischen Dicarbonsäuren mit 4 bis 15 C-Atomen, vorzugsweise 4 bis 8 C-Atomen, mit Glykolen, bevorzugt Glykolen mit 2 bis 25 C-Atomen oder durch Polymerisation von Lactonen mit 3 bis 20 C-Atomen herstellen. Als Dicarbonsäuren lassen sich beispielsweise Glutarsäure, Pimelinsäure, Korksäure, Sebacinsäure, Dodecansäure und vorzugsweise Adipinsäure, Bernsteinsäure und Phthalsäuren einsetzen. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureanhydride oder Carbonsäurechloride zu verwenden. Geeignete aromatische Dicarbonsäuren sind Terephthalsäure, Isophthalsäure oder Mischungen aus diesen mit anderen Dicarbonsäuren, z.B. Diphensäure, Sebacinsäure, Bernsteinsäure und Adipinsäure. Beispiele für geeignete Glykole sind Diethylenglykol, 1,5-Pentandiol, 1,10-Decandiol und 2,2,4-Trimethylpentandiol-1,5. Vorzugs weise verwendet werden 1,2-Ethandiol, 1,4-Butandiol, 1,6-Hexandiol und 2,2-Dimethylpropandiol-1,3; 1,4-Dimethylolcyclohexan; 1,4-Diethanolcyclohexan, ethoxilierte/propoxilierte Produkte des 2,2-Bis-(4-hydroxyphenylen)-propan (Bisphenol A). Je nach den gewünschten Eigenschaften der Polyurethane können die Polyole alleine oder als Mischung in verschiedenen Mengenverhältnissen verwendet werden. Als Lactone für die Herstellung der

Polyesterole eignen sich z.B. α,α-Dimethyl-β-propiolacton, γ-Butyrolacton und vorzugsweise ε-Caprolacton.

Die Polyetherole sind im wesentlichen lineare, endständige Hydroxylgruppen aufweisende Substanzen, die Etherverbindungen enthalten und ein Molekulargewicht von etwa 600 bis 4000, vorzugsweise von 1000 bis 2000, besitzen. Geeignete Polyetherole können leicht durch Polymerisation von cyclischen Ethern, wie Tetrahydrofuran, oder durch Umsetzung von einem oder mehreren Alkylenoxiden mit 2 bis 4 Kohlenstoffatomen im Alkylenrest mit einem Startermolekül, das zwei aktive Wasserstoffatome im Alkylenrest gebunden enthält, hergestellt werden. Als Alkylenoxide seien beispielsweise genannt: Ethylenxoid, 1,2-Propylenoxid, Epichlorhydrin, 1,2- und 2,3-Butylenoxid. Die Alkylenoxide können einzeln, alternierend nacheinander oder als Mischung verwendet werden. Als Startermoleküle kommen beispielsweise in Betracht: Wasser, Glykole, wie Ethylenglykol, Propylenglykol, 1,4-Butandiol und 1,6-Hexandiol, Amine, wie Ethylendiamin, Hexamethylendiamin und 4,4′-Diamino-diphenylmethan und Aminoalkohole, wie Ethanolamin. Ebenso wie die Polyesterole können auch die Polyetherole allein oder in Mischungen verwendet werden. Polycarbonatdiole sind ebenfalls geeignet. Als Polycarbonatdiole kommen solche mit aromatischen Dihydroxyverbindungen, z.B. auf Basis 4,4′-Dihydroxydiphenyl-2,2-propan oder solche auf Basis aliphatischer Dihydroxyverbindungen, z.B. 1,6-Hexandiol, in Frage. Die Molmassen erstrecken sich von 500 bis 4000, vorzugsweise von 1000 bis 2000.

Als Baustein B werden Diole mit 2 bis 20 Kohlenstoffatomen, vorzugsweise 2 bis 10 C-Atome, eingesetzt, so z.B. 1,2-Ethandiol, 1,3-Propandiol, 1,4-Butandiol, 1,6-Hexandiol, 1,5-Pentandiol, 1,10-Decandiol, 2-Methyl-1,3-propandiol, 2-Methyl-2-butyl-1,3-propandiol, 2,2-Dimethyl-1,4-butandiol, 2-Methyl-2-butyl-1,3-propandiol, Hydroxypivalinsäureneopentylglykol ester, Diethylenglykol, Triethylenglykol und Methyldiethanolamin, 1,4-Dimethylolcyclohexan, 1,4-Diethanolcyclohexan. Ethoxlierte/propoxilierte Produkte des Bisphenol A (Handelsname Dianol). Die Diole können einzeln oder als Gemische verwendet werden. In untergeordnetem Maße können auch Diamine mit 2 bis 15 Kohlenstoffatomen wie Ethylendiamin, 1,6-Hexamethylendiamin, 4,9-Dioxododecan-1,12-diamin, 4,4′-Diaminodiphenylmethan oder Aminoalkohole wie z.B. Monoethanolamin, Monoisopropanolamin und 2-Amino-2-methylpentan-2-ol eingesetzt werden. Hierbei hat es sich als vorteilhaft erwiesen, die dabei entstehenden Harnstoffgruppen in die Polymerkette einzubauen. Die Harnstoffgruppen am Kettenende sind hierbei von untergeordneter Bedeutung.

In gleicher Weise können als Bausteine B die genannten Diole auch ganz oder teilweise durch Wasser ersetzt werden.

Als Triole (Bausteine C) werden Verbindungen mit 3 bis 18, vorzugsweise 3 bis 6 C-Atomen, angewandt. Beispiele für entsprechende Triole sind Glycerin oder Trimethylolpropan. Geeignet sind auch niedermolekulare Umsetzungsprodukte von z.B. Trimethylolpropan mit Ethylenoxid und/oder Propylenoxid. Das Vorhandensein von Triolen bei der Polyaddition führt zu einer Verzweigung des Endprodukts, was sich, sofern keine örtliche Vernetzung auftritt, positiv auf die mechanischen Eigenschaften des Polyurethans auswirkt.

Als Komponente D lassen sich lineare alpha-omega-Perfluoropolyether-diole (z.B. Fomblin Z-DOL® der Fa. Montefluos) entsprechend folgender Zusammensetzung

$HO-CH_2-CF_2-(C_2F_4-O)_m-(CF_2-O)_n-CF_2-CH_2OH$

wobei $m/n = 0{,}7 \pm 0{,}2$ ist, oder ein Polyether-1,3-diol mit Perfluoralkylenendgruppen (z.B. Tegomer DF 1316® der Fa. Goldschmidt) gemäß folgender Formel

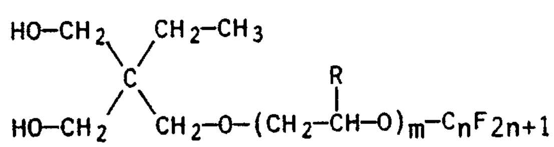

in der

$R = CH_3$, $C_2H_5$ und

$n = 4$ bis 10 sowie $m = 1$ bis 30 bedeuten,

ebenso wie ein in molaren Verhältnissen hergestelltes Umsetzungsprodukt aus einem linearen perfluorierten Monoalkohol oder Monoamin mit 4 bis 20 Kohlenstoffatomen mit einem Diisocyanat mit 6 bis 30 Kohlenstoffatomen und einem Triol oder Diolmonoamin mit 3 bis 16 Kohlenstoffatomen der Formel

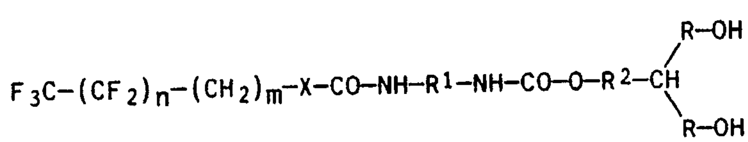

mit
n = 1 bis 18
m = 1 bis 2 und X = O, NH sowie
$R^1$ = einem Diisocyanatrest,
$R^2$ = $(-CH_2-)_x$ und
R = $(-CH_2-)_y$,
wobei hierfür x = 0 bis 5 und y = 2 bis 4 ist,
heranziehen.

Zur Bildung der Fluorgruppen-haltigen Polyurethane oder NCO-gruppenhaltiger Zwischenprodukte werden die unter A, B, C und D genannten Bausteine mit aliphatischen, cycloaliphatischen oder aromatischen Diisocyanaten mit 6 bis 30 Kohlenstoffatomen (Baustein E) umgesetzt. Zu diesem zweck eignen sich z.B. Verbindungen wie 2,4-Toluylen-diisocyanat, 2,6-Toluylendiisocyanat, m-Phenylendiisocyanat, 4-Chlor-1,3-phenylendiisocyanat, 1,5-Naphthylendiisocyanat, 1,6-Hexamethylendiisocyanat, 1,4-Cyclohexylendiisocyanat und 1,5-Tetrahydronaphthylendiisocyanat, 4,4'-Diphenylmethandiisocyanat, 4,4'-Dicyclohexylmethandiisocyanat oder Isophorondiisocyanat. Ebenso können Fluorgruppen-haltige Diisocyanate eingesetzt werden. Diese Fluorgruppen-haltigen Diisocyanate könenn bis zu 32 Molprozente der gesamten Molmenge Diisocyanat betragen.

Zur Bildung der OH-gruppenhaltigen Polyurethanharnstoffelastomeren wird das NCO-gruppenhaltige Zwischenprodukt aus A bis E mit Aminoalkoholen (mit 2 bis 16 Kohlenstoffatomen) umgesetzt. Diese Aminoalkohole mit 2 bis 16, vorzugsweise 3 bis 6 Kohlenstoffatomen, sind u.a. Monoethanolamin, Methylisopropanolamin, Ethylisopropanolamin, Methylethanolamin, 3-Aminopropanol, 1-Ethylaminobutan-2-ol, 4-Methyl4-aminopentan-2-ol, N-(2-Hydroxyethyl)anilin. Diolamine sind besonders geeignet, da durch ihre Anlagerung am Kettenende die OH-Zahl der Polymeren verdoppelt wird. Als besonders günstig haben sich Diethanolamin und Diisopropanolamin erwiesen.

Werden keine OH-Endgruppen benötigt, so läßt sich die Reaktion bei Erreichen des gewünschten Molekulargewichts durch Zugabe eines Monoalkohols oder Amins abbrechen, z.B. mit Dibutylamin, Diethylamin, Butylamin, Hexylamin, Methanol, Ethanol.

Die so aufgebauten thermoplastischen, elastischen OH-gruppenhaltigen Polyurethane werden in Lösung nach dem 2-Stufenverfahren, gegebenenfalls in Gegenwart von Katalysatoren und anderen Hilfsmitteln und/oder Zusatzstoffen hergestellt. Diese Produkte nach dem lösungsmittelfreien Batch- Verfahren herzustellen, ist nicht möglich. Da sich aufgrund der Anwesenheit des Triols und der Reaktion von Amin mit NCO-Gruppen bei der Substanzpolyaddition zumindest teilweise Gel-Teilchen bilden, wird in Lösung gearbeitet. Allgemein wird bei der Lösungspolyaddition die Gefahr einer örtlichen Übervernetzung, wie sie bei der Substanzpolyaddition auftritt, vermieden.

Beim 2-Stufenverfahren sind je nach Reaktionsbedingungen (Lösungsmittelmenge, Reaktionswärme) zwei unterschiedliche Fahrweisen möglich.

Fahrweise 1: Das Diisocyanat wird mit etwas Lösungsmittel vorgelegt, dann werden die Bausteine A, B, C, D und gegebenenfalls der Katalysator und die Hilfs- und Zusatzstoffe in Lösungsmittel bei Temperaturen von 20 bis 90 °C, vorzugsweise 30 bis 70 °C, in 0,2 bis 5 Stunden zugegeben. Die Komponenten werden bis zum gewünschten NCO-Gehalt umgesetzt, dann wird in der 2. Stufe das Abstoppmittel zugesetzt.

Fahrweise 2: Bei diesem Verfahren werden alle Ausgangskomponenten A bis E in einem Teil des Lösungsmittels gelöst, so daß Lösungen mit einem Feststoffgehalt von 15 bis 50 Gew.% gebildet werden. Anschließend werden die Lösungen unter Rühren auf Temperaturen von 20 bis 90 °C, vorzugsweise von 30 bis 70 °C, gegebenenfalls nach der Katalysatorzugabe, erwärmt. Dann werden die Komponenten bis zum gewünschten NCO-Gehalt umgesetzt, danach wird in der 2. Stufe das Abstoppmittel zugegeben.

Beim 2-Stufenverfahren wird in der ersten Stufe mit einem NCO-Überschuß, gegenüber den Bausteinen A bis D gearbeitet. Bei beiden Fahrweisen ist es möglich, in einem Teil des Lösungsmittels die Reaktion zu beginnen und das restliche Lösungsmittel während oder nach der Reaktion zuzugeben.

Als Lösungsmittel für die Herstellung der Polyurethane werden vorzugsweise cyclische Ether, wie Tetrahydrofuran und Dioxan, und cyclische Ketone, wie Cyclohexanon, verwendet. Selbstverständlich können je nach Anwendungsgebiet die Polyurethane auch in anderen stark polaren Lösungsmitteln, wie Dimethylformamid, N-Methylpyrrolidon, Dimethylsulfoxid oder Ethylenglykolacetat gelöst werden. Ebenso ist es möglich, die genannten Lösungsmittel mit Aromaten, wie Toluol oder Xylol und Estern, wie Ethyl- oder Butylacetat, zu mischen.

Als geeignete Katalysatoren zur Herstellung der Polyurethane und für die Vernetzungsreaktion seien beispielhaft genannt: tert.-Amine, wie Triethylamin, Triethylendiamin, N-Methyl-pyridin und N-Methyl-morpholin, Metallsalze, wie Zinndioctoat, Bleioctoat und Zinkstearat und organische Metallverbindungen, wie Dibutylzinndilaurat oder Titantetrabutylat. Die geeig nete Katalysatormenge ist abhängig von der Wirksamkeit des in Frage kommenden Katalysators. Im allgemeinen hat sich als zweckmäßig erwiesen, 0,005 bis 0,3 Gewichtsteile für jeweils 100 Gewichtsteile, vorzugsweise 0,01 bis 0,1 Gewichtsteile für jeweils 100 Gewichtsteile Polyurethan zu verwenden.

Die erfindungsgemäß verwendeten Polyurethane lassen sich als alleinige Bindemittel für die Herstellung von Magnetschichten verwenden, es ist jedoch für spezielle Anwendungszwecke bei magnetischen Aufzeichnungsträgern gemäß der Erfindung vorteilhaft, eine zweite Bindemittelkomponente in Mengen von 5 bis 50 Gewichtsteilen, vorzugsweise von 10 bis 40 Gewichtsteilen, bezogen auf die resultierende Gesamtbindemittelmenge, zuzusetzen. Die im Bindemittelgemisch enthaltenen physikalisch trocknenden Bindemittel sind bekannt. Es handelt sich hierbei unter anderem um ein Polyvinylformal-Bindemittel, welches durch Hydrolyse eines Polymerisats eines Vinylesters und anschließende Umsetzung des Vinylalkohol-Polymeren mit Formaldehyd hergestellt wurde. Die Polyvinylformale haben zweckmäßigerweise einen Vinylformalgruppengehalt von mindestens 65 Gew.% und insbesondere mindestens 80 Gew.%. Geeignete Polyvinylformale haben einen Gehalt an Vinylalkohol-Gruppen von 5 bis 13 Gew.% einen Gehalt an Vinylformal-Gruppen von 80 bis 88 Gew.%, ein spezifisches Gewicht von ca. 1,2 und eine Viskosität von 50 bis 120 mPas gemessen bei 20 °C mit einer Lösung von 5 g Polyvinylformal in 100 ml Phenol-Toluol (1:1). In gleicher Weise geeignet sind neben dem Polyvinylformal Vinylchlorid-diol-mono- oder -di(meth)acrylat-Copolymerisate, die sich z.B. in an sich bekannter Weise durch Lösungscopolymerisation oder Suspensionscopolymeristion von Vinylchlorid und dem Diol-monomethacrylat oder -monoacrylat herstellen lassen. Das hierfür zum Einsatz gelangende Diolmono- oder -diacrylat oder -methacrylat ist ein Veresterungsprodukt von Acrylsäure oder Methacrylsäure mit der entsprechenden molaren Menge an aliphatischem Diol mit 2 bis 4 C-Atomen, wie Ethylenglykol, 1,4-Butandiol und bevorzugt Propandiol, wobei das Propandiol vorzugsweise aus 1,3-Propandiol und 0 bis 50 Gew.% 1,2-Propandiol besteht. Die Copolymeriste haben zweckmäßigerweise einen Vinylchloridgehalt von 50 bis 95 Gew.% und einen Diolacrylat- oder -methacrylat-Gehalt von 5 bis 50 Gew.%. Besonders geeignete Copolymerisate besitzen vorzugsweise einen Gehalt von 70 bis 90 Gew.% Vinylchlorid und 10 bis 30 Gew.% Diolmonoacrylat bzw. Diolmonomethacrylat. Eine 15 %ige Lösung besonders geeigneter Copolymerisate wie der Vinylchlorid-Propandiolmonoacrylat-Copolymerisate in einem Gemisch aus gleichen Volumenteilen von Tetrahydrofuran und Dioxan weist bei 25 °C eine Viskosität von etwa 30 mPas auf. Der K-Wert nach H.Fikentscher (Cellulosechemie 13 (1932), S. 58 ff.) der besonders geeigneten Produkte liegt zwischen 30 und 50, vorzugsweise bei etwa 40.

Außerdem lassen sich vorteilhaft Phenoxyharze, deren Konstitution mit der wiederkehrenden Formel

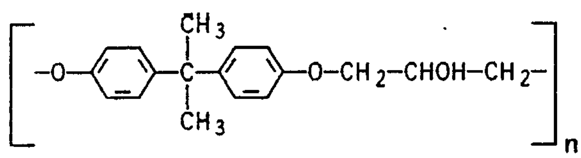

in der n annähernd gleich 100 ist, zu beschreiben ist, einsetzen. Es handelt sich hierbei um Polymere, wie sie unter den Handelsbezeichnungen Epikote® der Firma Shell Chemical Co. oder unter der Bezeichnung Epoxidharz PKHH® der Union Carbide Corporation bekannt sind.

In gleicher Weise eignen sich Celluloseester-Bindemittel zur Verwendung in dem bezeichneten Bindemittelgemisch. Dies sind Veresterungsprodukte der Cellulose mit Salpetersäure oder mit Carbonsäuren mit 1 bis 4 Kohlenstoffatomen, wie z.B. Celluloseacetat, Cellulosetriacetat, Celluloseacetopropionat, Celluloseacetobutyrat.

Die weitere Verarbeitung des Bindemittelgemisches mit magnetischen Materialien und Hilfsstoffen zu den erfindungsgemäßen magnetischen Aufzeichnungsträgern erfolgt in an sich bekannter Weise.

Als anisotrope magnetische Materialien können die an sich bekannten Pigmente verwendet werden, die die Eigenschaften der resultierenden Magnetschichten wesentlich beeinflussen, wie z.B. Gamma-Eisen(III)-oxid, feinteiliger Magnetit, ferromagnetisches undotiertes oder dotiertes Chromdioxid, kobaltmodifiziertes Gamma-Eisen(III)-oxid, Bariumferrite oder ferromagnetische Metallteilchen. Bevorzugt sind nadelförmiges kobaltmodifiziertes oder unmodifiziertes Gamma-Eisen(III)oxid sowie ferromagnetisches Chromdioxid und Metallpigment. Die Teilchengröße beträgt im allgemeinen 0,2 bis 2 µm, bevorzugt ist der Bereich von 0,3 bis 0,8 µm.

In an sich bekannter Weise können die Magnetschichten ferner Zusätze, wie Dispergiermittel und in untergeordneten Mengen auch weitere Gleitmittel, aber auch Füllstoffe enthalten, die bei der Dispergierung der Magnetpigmente oder bei der Herstellung der Magnetschicht zugemischt werden. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente, amphotere Elektrolyte, wie Lecithin

sowie Fettsäureester oder Wachse, Siliconöle, Ruß usw. Die Menge der Zusätze ist die an sich übliche, sie liegt im allgemeinen unter 6 Gew.%, vorzugsweise unter 3 und insbesondere unter 1,5 Gew.%, bezogen auf die Magnetschicht.

Das Mengenverhältnis von magnetischem Material zu Bindemittel in den erfindungsgemäßen Aufzeichnungsmaterialien liegt zwischen 1 bis 10 und insbesondere 3 bis 6 Gewichtsteilen magnetisches Material auf ein Gewichtsteil des Bindemittelgemisches. Es ist ein besonderer Vorteil, daß aufgrund des vorzüglichen Pigmentbindevermögens der speziellen Polyurethane hohe Magnetmaterialkonzentrationen in den Magnetschichten möglich sind, ohne daß die mechanisch-elastischen Eigenschaften verschlechtert oder die Anwendungseigenschaften merklich in Mitleidenschaft gezogen werden.

Als nichtmagnetische und nichtmagnetisierbare Träger lassen sich die üblichen starren oder flexiblen Trägermaterialien verwenden, insbesondere Folien aus linearen Polyestern, wie Polyethylenterephthalat, im allgemeinen in Stärken von 4 bis 200 µm und insbesondere von 6 bis 36 µm. In neuerer Zeit ist auch die Anwendung der Magnetschichten auf Papierträgern für Zwecke der mittleren Datentechnik bedeutend geworden; auch hierfür lassen sich die erfindungsgemäßen Beschichtungsmassen vorteilhaft verwenden.

Die Herstellung der erfindungsgemäßen magnetischen Aufzeichnungsträger kann in bekannter Weise erfolgen. Zweckmäßig wird die in einer Dispergiermaschine, z.B. einer Topfkugelmühle oder einer Rührwerksmühle, aus dem magnetischen Material und einer Lösung der Bindemittel unter Zusatz von Dispergiermitteln und anderen Zusätzen hergestellte Magnetpigmentdispersion nach - falls erforderlich - dem Zumischen des Polyisocyanatvernetzers filtriert und mit der üblichen Beschichtungsmaschine, z.B. mittels eines Linealgießers, auf den nichtmagnetischen Träger aufgetragen. In der Regel erfolgt eine magnetische Ausrichtung, bevor die flüssige Beschichtungsmischung auf dem Träger getrocknet wird; letzteres geschieht zweckmäßigerweise in 10 bis 200 s bei Temperaturen von 50 bis 90° C. Die Magnetschichten können auf üblichen Maschinen mittels Hindurchführen zwischen geheizten und polierten Walzen, gegebenenfalls bei Anwendung von Druck und Temperaturen von 25 bis 100° C, vorzugsweise 60 bis 80° C, geglättet und verdichtet werden. Dabei hat es sich bei vernetzenden Bindemitteln als sehr vorteilhaft erwiesen, die Kalandrierung vorzunehmen bevor die Vernetzung abgeschlossen ist, da die OH-Polymeren in unvernetzten Zustand sehr thermoplastisch sind, ohne hierbei zu verkleben. Die Dicke der Magnetschicht beträgt im allgemeinen 0,5 bis 20 µm, vorzugsweise 1 bis 10 µm. Im Falle der Herstellung von Magnetbändern werden die beschichteten Folien in der Längsrichtung in den üblichen, meist nach Zoll festgelegten Breiten geschnitten.

Die erfindungsgemäßen magnetischen Aufzeichnungsträger weisen ohne zusätzliche Gleitmittel oder bei stark verringertem Gleitmittelzusatz gegenüber solchen, die ,unter Verwendung von Polyurethanen bzw. Polyurethanmischungen nach dem Stand der Technik erhalten wurden, eine erniedrigte Gleitreibung auf. Ihre dennoch hohe Oberflächenhärte und der hohe E-Modul, die auch bei Temperaturen von 50° C um weniger als 50 % abfallen, sind weitere vorteilhafte Eigenschaften der erfindungsgemäßen Aufzeichnungsträger. Des weiteren werden im Dauerlauftest und speziell im Klimatest (bei 40° C und 80 % rel. Luftfeuchte) alle gestellten Anforderungen voll erfüllt. Überraschend war außerdem, daß bei den erfindungsgemäßen magnetischen Aufzeichnungsträgern auch unter erschwerten klimatischen Bedingungen keine schlechtere Haftung der bindemittelhaltigen Magnetschicht auf den üblichen Trägermaterialien sich ergibt als bei üblichen Magnetband-Bindemittel ohne den Einbau einer reibungsvermindernden Komponente.

Die in den nachstehenden Beispielen und Vergleichsversuchen genannten Teile und Prozente beziehen sich, soweit nicht anders angegeben, auf das Gewicht. Volumenteile verhalten sich zu Gewichtsteilen wie Liter zu Kilogramm.

Polymer A

In einem beheizbaren Reaktionsgefäß von 150.000 Volumenteilen Inhalt, ausgerüstet mit Rührer und Rückflußkühler, werden 7.875 Teile eines Polyesterdiols aus Adipinsäure und 1,4-Butandiol (Molekulargewicht ca. 1.000), 450 Teile eines Perfluorpolyetherdiols (Molekulargewicht ca. 2.400), 911 Teile 1,4-Butandiol, 50 Teile Trimethylolpropan und 4.828 Teile 4,4′-Diphenylmethandiisocyanat in 57.026 Teilen Tetrahydrofuran gelöst und auf ca. 55° C erwärmt. Die Komponenten werden bis zu einer Endviskosität von 1 Pas (bei 60° C) umgesetzt und anschließend mit 42.770 Teilen Tetrahydrofuran auf einen Feststoffgehalt von 12,5 % verdünnt. Der NCO-Gehalt beträgt 0,07 %. Gleichzeitig wird die Reaktion durch Zugabe von 142 Teilen Diethanolamin abgestoppt. Der K-Wert des gebildeten Polymeren beträgt 62, gemessen als 1 %ige Lösung in Dimethylformamid.

Polymer B

In einem beheizbaren Reaktionsgefäß von 150.000 Volumenteilen Inhalt, ausgerüstet mit Rührer und Rückflußkühler, werden 7.875 Teile eines Polyesterdiols aus Adipinsäure und 1,4-Butandiol (Molekulargewicht ca. 1.000), 135 Teile eines Perfluorpolyetherdiols (Molekulargewicht ca. 2.400), 923 Teile 1,4-Butandiol, 50 Teile Trimethylolpropan und 4.828 Teile 4,4′-Diphenylmethandiisocyanat in 55.814 Teilen Tetrahydrofuran gelöst und auf ca. 55 °C erwärmt. Die Komponenten werden bis zu einer Endviskosität von 1 Pas (bei 60 °C) umgesetzt. Der NCO-Gehalt beträgt 0,08 %. Anschließend wird mit 41.860 Teilen Tetrahydrofuran auf einen Feststoffgehalt von 12,5 % verdünnt. Gleichzeitig wird die Reaktion durch Zugabe von 142 Teilen Diethanolamin abgestoppt. Der K-Wert des gebildeten Polymeren beträgt 59, gemessen als 1 %ige Lösung in Dimethylformamid.

Polymer C

Es wurde wie beim Polymer A beschrieben verfahren, jedoch wurde anstelle des Perfluoretherdiols die äquivalente Menge des Polyesterdiols eingesetzt.

Polymer D

Es wurde wie beim Polymer B beschrieben verfahren, jedoch wurde anstelle des Perfluoretherdiols die äquivalente Menge des Polyesterdiols eingesetzt.

Beispiel 1

In einer Stahlkugelmühle mit einem Füllvolumen von 100.000 Volumenteilen, die mit etwa 40 Umdrehungen pro Minute betrieben wird, wurden 100.000 Teile Stahlkugeln, 16.000 Teile einer 12,5 %igen Lösung des Polymeren A, 10.000 Teile einer 10 %igen Lösung eines Polyvinylformals, bestehend aus 82 % Vinylformal-, 12 % Vinylacetat- und 6 % Vinylalkoholeinheiten, 135 Teile Zinkstearat und 13.500 Teile eines ferromagnetischen Chromdioxidpigments mit einer mittleren Teilchengröße von 0,5 µm und einem Verhältnis von Länge zu Dicke von 4:1 bis 9:1 und 4.500 Teile Tetrahydrofuran eingefüllt und etwa 120 Stunden dispergiert. Die Magnetdispersion wurde sodann unter Druck durch einen Filter von 5 µm Porenweite filtriert. Mit einem Linealgießer wird nach der üblichen Technik eine 20 µm starke Polyethylenterephthalatfolie mit der Magnetdispersion beschichtet und nach Durchlaufen eines Magnetfeldes die Beschichtung bei Temperaturen zwischen 60 und 100 °C getrocknet. Durch Hindurchführen zwischen beheizten Walzen (70 °C, Liniendruck 200 kg/cm) wurde die Magnetschicht verdichtet und geglättet. Die resultierende Dicke betrug 5 µm. Die beschichtete Folie wurde anschließend in Bänder von 3,81 mm Breite geschnitten.

Die erhaltenen Magnetbänder wurden folgenden Tests unterzogen:

Test 1:

Reibungskoeffizient Schicht/Stahl, vor/nach Dauerlauf

Die Bestimmung der Reibungszahlen erfolgt nach DIN 45 522, Blatt 1. Die Reibungskoeffizienten werden am unbenutzten Band und am durch Dauerlauf benutzten Band gemessen.

Test 2:

Quasistatische Reibung

Die Reibungszahl wird durch Messen einer Zugkraft bestimmt, die ein über eine feststehende Meßtrommel geführtes Magnetband durch Reibung erzeugt. Die Meßtrommel ist eine Stahltrommel mit einer Oberflächenrauhigkeit von ca. 0,15 µm und einem Durchmesser von 70 mm. Das Bandstück ist 25 cm lang und wird bei einem Bandzug von 20 cN mit einer Geschwindigkeit von 1 mm/sec. und einem Umschlingungswinkel von 180° C über die Trommel geführt. Der Zug an der Meßdose F ist ein Maß für die Reibungszahl µ und zwar nach

$\mu = \frac{1}{\pi} x \ln \frac{F}{20}$

(Prüfklima: 23° C, 50 % rel. Feuchte).

Test 3:

Dynamische Reibung

Die Reibungszahl wird entsprechend Test 2 durchgeführt, jedoch wird das Magnetband über eine sich mit einer Umfangsgeschwindigkeit von 9,5 cm/sec drehenden Meßtrommel geführt.

Test 4:

Dauerlauf-Abrieb

Mit dieser Messung werden die Abriebeigenschaften eines Bandes beurteilt. Es wird der Abrieb in Form des Gewichtsverlustes einer Bandschleife in mg gemessen. Dabei beträgt die Schleifenlänge 95 cm, die Bandgeschwindigkeit 4 m/sec, der Bandzug 35 cN und die Laufzeit 1 Stunde, bei einer Umgebungstemperatur von 23° C und einer rel. Luftfeuchte von 50 %.

Die Ergebnisse sind in der Tabelle angegeben.

Beispiel 2

Es wurde wie in Beispiel 1 beschrieben verfahren, jedoch wurden anstelle des Polymeren A das Polymer B eingesetzt.

Vergleichsversuch 1

Es wurde wie in Beispiel 1 beschrieben verfahren, jedoch wurde anstelle des Polymeren A das Polymer C eingesetzt. Die Ergebnisse sind in der Tabelle angegeben.

Vergleichsversuch 2

Es wurde wie in Beispiel 2 beschrieben verfahren, jedoch wurde anstelle des Polymeren B das Polymer D eingesetzt. Die Ergebnisse sind in der Tabelle angegeben.

Tabelle

| | Beispiele | | Vergleichsversuche | |
|---|---|---|---|---|
| | 1 | 2 | 1 | 2 |
| Test 1 vor Dauerlauf | 0,25 | 0,29 | 0,45 | 0,53 |
| Test 1 nach Dauerlauf | 0,28 | 0,29 | 0,58 | 0,61 |
| Test 2 | 0,21 | 0,25 | 0,35 | 0,37 |
| Test 3 | 0,23 | 0,25 | 0,52 | 0,49 |
| Test 4 | 0,2 | 0,21 | 4,6 | 3,2 |

**Ansprüche**

1. Magnetische Aufzeichnungsträger, bestehend aus einem nichtmagnetischen Trägermaterial und mindestens einer haftfest darauf aufgebrachten Magnetschicht auf der Basis eines in einem mindestens zu 50 Gew.% aus einem thermoplastischen Polyurethan bestehenden Bindemittel feinverteilten magnetischen Materials, dadurch gekennzeichnet, daß als thermoplastisches Polyurethan ein fluorgruppenhaltiges in Tetrahydrofuran lösliches, isocyanatgruppenfreies, verzweigtes Polyurethan mit OH-gruppenhaltigen Harnstoffgruppen an den Kettenenden und einem Molekulargewicht zwischen 25 000 und 150 000 eingesetzt wird, welches aus

A) 1 Mol eines Polyols mit einem Molekulargewicht zwischen 400 und 4000,

B) 0,3 bis 10 Mol eines Diols mit 2 bis 18 Kohlenstoffatomen,

C) 0,01 bis 1 Mol eines Triols mit 3 bis 18 Kohlenstoffatomen,

D) 0,001 bis 0,4 Mol einer Perfluorverbindung mit zwei gegenüber Isocyanaten reaktiven Endgruppen und einem Molgewicht zwischen 300 und 4000,

E) 1,25 bis 13 Mol eines Diisocyanats mit 6 bis 30 Kohlenstoffatomen, wobei das Verhältnis NCO:OH in der Summe der Komponenten A, B, C und D 0,95:1,0 bis 1,1:1,0 beträgt, und

F) 0,05 bis 2 Mol eines OH-gruppenhaltigen, gegenüber Isocyanaten reaktiven Amins

hergestellt wird.

2. Magnetische Aufzeichnungsträger, bestehend aus einem nichtmagnetischen Trägermaterial und mindestens einer haftfest darauf aufgebrachten Magnetschicht auf der Basis eines in einem mindestens zu 50 Gew.% aus einem thermoplastischen Polyurethan bestehenden Bindemittel feinverteilten magnetischen Materials, dadurch gekennzeichnet, daß als thermoplastisches Polyurethan ein fluorgruppenhaltiges in Tetrahydrofuran lösliches, isocyanatgruppenfreies, verzweigtes Polyurethan mit OH-gruppenhaltigen Harnstoffgruppen an den Kettenenden und einem Molekulargewicht zwischen 25 000 und 150 000 eingesetzt wird, welches aus

A) 1 Mol eines Polyols mit einem Molekulargewicht zwischen 400 und 4000,

B) 0,3 bis 10 Mol eines Diols mit 2 bis 18 Kohlenstoffatomen,

C) 0,01 bis 1 Mol eines Triols mit 3 bis 18 Kohlenstoffatomen,

D) 0,001 bis 0,4 Mol einer Perfluorverbindung mit zwei gegenüber Isocyanaten reaktiven Endgruppen und einem Molgewicht zwischen 300 und 4000,

E) 1,25 bis 13 Mol eines Diisocyanats mit 6 bis 30 Kohlenstoffatomen, wobei das Verhältnis NCO:OH in der Summe der Komponenten A, B, C und D 0,95:1,0 bis 1,1:1,0 beträgt, und

F) 0,05 bis 2 Mol eines OH-gruppenfreien, gegenüber Isocyanaten reaktiven Monoamins

hergestellt wird.

3. Magnetischer Aufzeichnungsträger gemäß Anspruch 1 oder 2, dadurch gekennzeichnet, daß die Komponente D ein Umsetzungsprodukt aus perfluorierten Monoalkoholen, Monoaminen oder Monocarbonsäuren mit 4 bis 20 Kohlenstoffatomen und Triolen ist, wobei die gegenüber Isocyanaten reaktive Wasserstoffatome tragenden Gruppen über ein Diisocyanat mit 6 bis 30 Kohlenstoffatomen an eine OH-Gruppe des Triols gebunden sind.

4. Magnetischer Aufzeichnungsträger gemäß Anspruch 1 oder 2, dadurch gekennzeichnet, daß die Komponente D ein Perfluorpolyetherdiol mit einem Molekulargewicht zwischen 500 und 4000 ist.

5. Magnetischer Aufzeichnungsträger gemäß Anspruch 2, dadurch gekennzeichnet, daß die Komponente D linear aufgebaut ist.

6. Magnetischer Aufzeichnungsträger gemäß Anspruch 2, dadurch gekennzeichnet, daß die Komponente D ein lineares Umsetzungsprodukt aus perfluorierten Monoalkoholen, Monoaminen oder Monocarbonsäuren mit 4 bis 20 Kohlenstoffatomen und Triolen ist, wobei die gegenüber Isocyanaten reaktive Wasserstoffatome tragenden Gruppen über ein Diisocyanat mit 6 bis 30 Kohlenstoffatomen an eine OH-Gruppe des Triols gebunden sind.

7. Magnetischer Aufzeichnungsträger gemäß Anspruch 1 oder 2, dadurch gekennzeichnet, daß ein Anteil von 0,001 bis 0,4 Mol der Komponente E ein fluorhaltiges Diisocyanat ist, mit der Maßgabe, daß die Molsumme aus dieser fluorhaltigen Diisocyanat-Komponente und der Komponente D nicht mehr als 0,4 Mol beträgt und das Verhältnis NCO:OH in der Summe der Komponenten A, B, C und D 0,95:1,0 bis 1,0:1,0 beträgt.

8. Magnetischer Aufzeichnungsträger gemäß Anspruch 1, dadurch gekennzeichnet, daß das thermoplastische, fluorgruppenhaltige, in Tetrahydrofuran lösliche, isocyanatgruppenfreie, verzweigte Polyurethan mit OH-gruppenhaltigen Harnstoffgruppen an den Kettenenden mit einem Isocyanat aus der Gruppe der Di-, Tri- und Polyisocyanate und der Isocyanatprepolymere mit einem Molgewicht bis zu 10 000 vernetzt wird.

9. Magnetischer Aufzeichnungsträger gemäß Anspruch 1, dadurch gekennzeichnet, daß die OH-Endgruppen zu mehr als 80 % aus einer
-NH-CO-NR′-R-OH oder

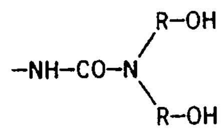 -Gruppe

bestehen,
wobei R = $-(CH_2)_n-$
R′ = -H, $-CH_3$, $-(CH_2)_m-CH_3$ und
n = 2 bis 10
m = 1 bis 10
bedeuten.

10. Magnetischer Aufzeichnungsträger gemäß Anspruch 1 oder 2, dadurch gekennzeichnet, daß die Perfluorkomponente, bezogen auf das Bindemittel zu weniger als 5 Gew.% und bevorzugt zu weniger als 3 Gew.% in das Bindemittel eingebaut ist.

11. Magnetischer Aufzeichnungsträger gemäß Anspruch 1 oder 2, dadurch gekennzeichnet, daß er das genannte Polyurethan als alleiniges Bindemittel enthält.